# EUROPEAN PATENT APPLICATION

(11) **EP 4 568 317 A1**
(43) Date of publication of application: **11.06.2025**
(21) Application number: 22953461.5
(22) Date of filing: 01.08.2022
(51) Int. Cl.: H04W 24/02, H04L 41/0803

(54) **CELL CONFIGURATION METHOD AND APPARATUS**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/109542
(87) International publication number: WO 2024/026646

(57) **Abstract**

The present application belongs to the technical field of communications. Provided are a cell configuration method and apparatus, and a device and a storage medium. The method comprises: receiving assistance information sent by a second node; and configuring a cell under a first node or the second node according to the assistance information. The present application provides a processing method for a "cell configuration" situation, such that a node configures a cell on the basis of assistance information sent by another node, and a suitable cell configuration can be selected for a cell on an IAB node; therefore, the control signal interference between a cell under an IAB node and other cells can be reduced, and the impact on the access of terminal devices and the normal operation of services is reduced.

## Description

### TECHNICAL FIELD

The disclosure relates to the field of communication technologies, and in particular, to a cell configuration method and apparatus, a device, and a storage medium.

### BACKGROUND

In wireless communication, Integrated Access and Backhaul (IAB) supports millimeter wave base stations for wireless access and backhaul, which can effectively reduce the need for new fiber deployment in dense networks and making wireless relay possible in the Next Generation Radio Access Network (NG-RAN). In the R18 standard, it is necessary to support mobile IAB, which means that the cells under the integrated access and backhaul relay node (IAB node) are mobile. However, there is control signal interference between the mobile IAB cell and other cells (including mobile and non-mobile cells), which affects the access of terminal devices and the normal operation of services.

### SUMMARY

The present disclosure proposes a cell configuration method and apparatus, a device and a storage medium, so that a node configures a cell based on assistance information sent by another node, which can reduce control signal interference between a cell under an IAB node and other cells, and reduce the impact on access of terminal devices and normal operation of services.

Embodiments of an aspect of the present disclosure provide a cell configuration method. The method is performed by a first node, and includes:
receiving assistance information sent by a second node;
configuring a cell under the first node or the second node based on the assistance information.

Optionally, in an embodiment of the present disclosure, the first node is an integrated access and backhaul relay node (IAB-node), the second node is a termination node (IAB-donor), and the first node configures the cell under the first node based on the assistance information.

Optionally, in an embodiment of the present disclosure, the first node is a target IAB-donor or target base station, the second node is a source IAB-donor or source base station, the assistance information is transmitted through an XnAP message, and the first node configures the cell under the first node based on the assistance information.

Optionally, in an embodiment of the present disclosure, the assistance information includes at least one of:
a configurable cell parameter set;
interference indication information;
a neighboring cell information list.

Optionally, in an embodiment of the present disclosure, the first node is an IAB -donor, the second node is an IAB-node, and wherein the first node configures the cell under the second node based on the assistance information.

Optionally, in an embodiment of the present disclosure, the first node is a source IAB-donor or source base station, the second node is a target IAB-donor or target base station, and wherein the first node configures the cell under the second node based on the assistance information.

Optionally, in an embodiment of the present disclosure, the assistance information includes at least one of:
cell configuration information that the first node is able to support;
interference indication information;
trajectory information of movement.

Optionally, in an embodiment of the present disclosure, the assistance information is transmitted through an F1 application protocol (F1AP) message or a radio resource control (RRC) message.

Optionally, in an embodiment of the present disclosure, the assistance information is transmitted through an Xn application protocol (XnAP) message.

Embodiments of another aspect of the present disclosure provide a cell configuration method. The method is performed by a second node, and includes:

sending assistance information to a first node, wherein the assistance information is configured to enable the first node to configure a cell under the first node or the second node.

Optionally, in an embodiment of the present disclosure, the first node is an integrated access and backhaul relay node (IAB-node), the second node is a termination node (IAB-donor), and wherein assistance information is configured to enable the first node to configure the cell under the first node.

Optionally, in an embodiment of the present disclosure, the first node is a target IAB-donor or target base station, the second node is a source IAB-donor or source base station, and wherein the assistance information is configured to enable the first node to configure the cell under the first node.

Optionally, in an embodiment of the present disclosure, the assistance information includes at least one of:
a configurable cell parameter set;
interference indication information;
a neighboring cell information list.

Optionally, in an embodiment of the present disclosure, the first node is an IAB-donor, the second node is an IAB-node, and wherein the assistance information is configured to enable the first node to configure the cell under the second node.

Optionally, in an embodiment of the present disclosure, the first node is a source IAB-donor or source base station, the second node is a target IAB-donor or target base station, and wherein the assistance information is configured to enable the first node to configure the cell under the second node.

Optionally, in an embodiment of the present disclosure, the assistance information includes at least one of:
cell configuration information that the first node is able to support;
interference indication information;
trajectory information of movement.

Optionally, in an embodiment of the present disclosure, the assistance information is transmitted through an F1 application protocol (F1AP) message or a radio resource control (RRC) message.

Optionally, in an embodiment of the present disclosure, the assistance information is transmitted through an Xn application protocol (XnAP) message.

Embodiments of yet another aspect of the present disclosure provide a cell configuration apparatus. The apparatus is arranged on a first node side, and includes:
a transceiver module, configured to receive assistance information sent by a second node;
a processing module, configured to configure a cell under the first node or the second node based on the assistance information.

Embodiments of yet another aspect of the present disclosure provide a cell configuration apparatus. The apparatus is arranged on a second node side, and includes:

a transceiver module, configured to send assistance information to a first node, wherein the assistance information is configured to enable the first node to configure a cell under the first node or the second node.

Embodiments of yet another aspect of the present disclosure provide a first node. The first node includes a processor and a memory. The memory is stored with a computer program. The processor is configured to execute the computer program stored in the memory, so as to cause the first node to implement the method described in embodiments of the above aspect.

Embodiments of yet another aspect of the present disclosure provide a second node. The second node includes a processor and a memory. The memory is stored with a computer program. The processor is configured to execute the computer program stored in the memory, so as to cause the second node to implement the method described in embodiments of the above aspect.

Embodiments of yet another aspect of the present disclosure provide a communication device, including a processor and an interface circuit;
the interface circuit is configured to receive code instructions and transmit the code instructions to the processor; and
the processor is configured to run the code instructions, to implement the method described in embodiments of an aspect.

Embodiments of yet another aspect of the present disclosure provide a communication device, including a processor and an interface circuit;
the interface circuit is configured to receive code instructions and transmit the code instructions to the processor; and
the processor is configured to run the code instructions, to implement the method described in embodiments of an aspect.

Embodiments of yet another aspect of the present disclosure provide a computer readable storage medium, configured to store instructions, which when executed, cause the method described in embodiments of an aspect to be implemented.

Embodiments of yet another aspect of the present disclosure provide a computer readable storage medium, configured to store instructions, which when executed, cause the method described in embodiments of another aspect to be implemented.

In summary, in embodiments of the present disclosure, assistance information sent by the second node is received; and the cell under the first or second node is configured based on assistance information. In embodiments of the present disclosure, enabling a node to configure a cell based on assistance information sent by another node can select appropriate cell configuration for the cell on the IAB node, thereby reducing control signal interference between the cell under the IAB node and other cells, and reducing the impact on access of terminal devices and normal operation of services. This disclosure provides a processing method for a situation of "cell configuration", which enables a node to configure a cell based on assistance information sent by another node, thereby reducing control signal interference between cells under IAB nodes and other cells, and reducing the impact on access of terminal devices and normal operation of services.

### BRIEF DESCRIPTION OF THE DRAWINGS

The above and/or additional aspects and advantages of the present disclosure will become apparent and easily understood from the following description of the embodiments in conjunction with the accompanying drawings, wherein:
Fig. 1 is a schematic diagram of an architecture of IAB provided in an embodiment of the present disclosure.
Fig. 2 is a schematic flowchart of a cell configuration method provided in an embodiment of the present disclosure;
Fig. 3 is a schematic flowchart of a cell configuration method provided in yet another embodiment of the present disclosure;
Fig. 4 is a schematic diagram of interaction of a cell configuration method provided in an embodiment of the present disclosure;
Fig. 5 is a schematic diagram of interaction of a cell configuration method provided in yet another embodiment of the present disclosure;
Fig. 6 is a schematic diagram of interaction of a cell configuration method provided in yet another embodiment of the present disclosure;
Fig. 7 is a schematic diagram of interaction of a cell configuration method provided in yet another embodiment of the present disclosure;
Fig. 8 is a schematic diagram of interaction of a cell configuration method provided in yet another embodiment of the present disclosure;
Fig. 9 is a schematic diagram of interaction of a cell configuration method provided in yet another embodiment of the present disclosure;
Fig. 10 is a schematic flowchart of a cell configuration method provided in yet another embodiment of the present disclosure;
Fig. 11 is a schematic diagram of interaction of a cell configuration method provided in yet another embodiment of the present disclosure;
Fig. 12 is a schematic diagram of interaction of a cell configuration method provided in yet another embodiment of the present disclosure;
Fig. 13 is a schematic diagram of interaction of a cell configuration method provided in yet another embodiment of the present disclosure;
Fig. 14 is a schematic diagram of interaction of a cell configuration method provided in yet another embodiment of the present disclosure;
Fig. 15 is a schematic diagram of interaction of a cell configuration method provided in yet another embodiment of the present disclosure;
Fig. 16 is a schematic diagram of interaction of a cell configuration method provided in yet another embodiment of the present disclosure;
Fig. 17 is a schematic diagram of interaction of a cell configuration method provided in another embodiment of the present disclosure;
Fig. 18 is a block diagram of a cell configuration apparatus provided in an embodiment of the present disclosure;
Fig. 19 is a block diagram of a cell configuration apparatus provided in another embodiment of the present disclosure;
Fig. 20 is a block diagram of a network side device provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when......" or "in case that......" or "in response to determining ......".

The network elements or network functions involved in embodiments of the present disclosure can be implemented as independent hardware devices or through software in the hardware devices, which are not limited in embodiments of the present disclosure.

Integrated access and backhaul (IAB) supports millimeter wave base stations for wireless access and backhaul, effectively reducing the need for new fiber deployment in dense networks and making wireless relays possible in the next generation radio access network (NG-RAN). The integrated access and backhaul relay node (IAB node) supports wireless access and backhaul through 5G new radio (NR). The termination node for NR feedback on the network side is called IAB donor, which is a next generation NodeB (gNB) with additional IAB functionality. Backhaul can be done through single hop or multi hop.

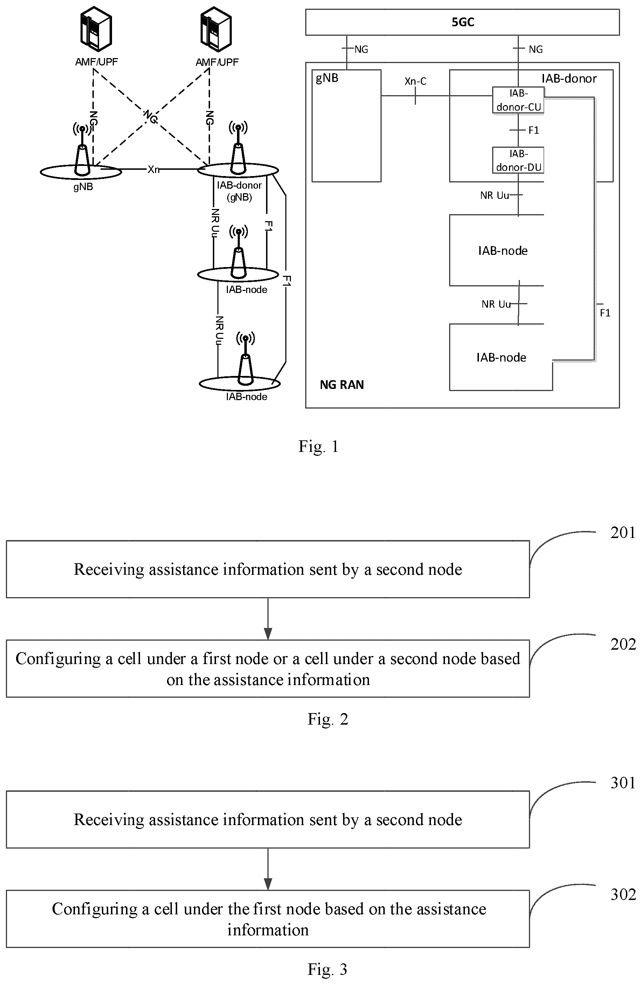

Fig. 1 shows a schematic diagram of an architecture of IAB provided in an embodiment of the present disclosure. As shown in Fig. 1, NG-RAN can be connected to the Access and Mobility Management Function (AMF) or User Plane Function (UPF) in the 5G Core Network (5GC) through the NG interface. NG-RAN can be wirelessly connected to gNB (IAB donor) that can serve IAB nodes through IAB nodes to support IAB. The IAB donor can include one IAB-donor-central unit (CU) and one or more IAB-donor-distributed units (DU). When gNB-CU-Control Plane (CP) and gNB-CU-User Plane (UP) are separated, IAB donor can include one IAB-donor-CU-CP, multiple IAB-donor-CU-UP, and multiple IAB-donor-DU. The IAB node can be connected to the upstream IAB node or IAB-donor-DU through the terminal function subset of NR Uu interface, which is the IAB Mobile Termination (IAB-MT) function in the IAB-node. The IAB-node provides wireless backhaul to downstream IAB nodes and terminals through the network function of NR Uu interface, which is the IAB-DU function of the IAB-node. The gNB can be connected to IAB-donor-CU in the IAB-donor through the Xn-C interface. The IAB-node and IAB-donor-DU in the IAB-donor can be connected to the IAB-donor-CU in the IAB-donor through the F1 interface.

In an embodiment of the present disclosure, backhaul for the control plane (F1-C) service between IAB-node and IAB-donor-CU can be performed through IAB-donor-DU and optional intermediate hop IAB-node. The backhaul for user plane (F1-U) business between IAB-node and IAB-donor-CU can be performed through IAB-donor-DU and optional intermediate hop IAB-node.

In an embodiment of the present disclosure, in the R18 standard, it is necessary to support mobile IAB, that is, the cells under the IAB node are mobile, and there is control signal interference between the cells under the IAB node and other cells (including mobile and non-mobile cells), such as physical cell identifier (PCI) conflicts and random access channel (RACH) conflicts, which affect the access of terminal equipment (UE) and the normal operation of services.

In an embodiment of the present disclosure, the terminal device may be a device that provides voice and/or data connectivity to the user. Terminal devices can communicate with one or more core networks via RAN (Radio Access Network), and can be IoT terminals such as sensor devices, mobile phones (also known as "cellular" phones), and computers with IoT terminals. For example, they can be fixed, portable, pocket sized, handheld, computer built-in, or vehicle mounted devices. For example, the terminal device may be a station (STA), a subscriber unit, a subscriber station, a mobile station, a mobile, a remote station, an access point, a remote terminal, an access terminal, a user terminal, or a user agent. Alternatively, the terminal device may also be an unmanned aerial vehicle device. Alternatively, the terminal device may also be a vehicle mounted device, such as a wireless communication enabled onboard computer or a wireless terminal connected to an external onboard computer. Alternatively, terminal devices may also be roadside devices, such as street lamps, signal lights, or other roadside devices with wireless communication capabilities.

The following provides a detailed description of the cell configuration method, apparatus, device, and storage medium provided in embodiments of the present disclosure with reference to the accompanying drawings.

Fig. 2 is a schematic flowchart of a cell configuration method provided in an embodiment of the present disclosure. The method is performed by a first node, and as shown in Fig. 2, the method may include the following steps:
Step 201, receiving assistance information sent by a second node;
Step 202, configuring a cell under the first node or the second node according to the assistance information.

For example, in an embodiment of the present disclosure, the first node and the second node may be network side devices, for example.

For example, in an embodiment of the present disclosure, the first node is an integrated access and backhaul relay node (IAB node), the second node is a termination node (IAB-donor), and wherein the first node configures the cell under the first node based on the assistance information.

In an embodiment of the present disclosure, when the second node is IAB-donor, the second node may be IAB-donor-CU, for example.

For example, in an embodiment of the present disclosure, the first node is a target IAB-donor or target base station, and the second node is a source IAB-donor or source base station, and wherein the first node configures the cell under the first node based on the assistance information, wherein the cell under the first node may refer to the cell under the IAB-node that accesses the network through the first node, but is not limited to this.

For example, in an embodiment of the present disclosure, the assistance information includes at least one of:
a configurable cell parameter set;
interference indication information;
a neighboring cell information list.

Optionally, in an embodiment of the present disclosure, the configurable cell parameter set is used to indicate that the first node can select appropriate cell configuration parameters from the cell configuration parameter set.

In an embodiment of the present disclosure, the first node may be pre-configured with multiple cell configuration parameter sets by Operation Administration and Maintenance (OAM). When the first node receives the assistance information sent by the second node, it can select appropriate cell configuration parameters from the multiple cell configuration parameter sets pre-configured by OAM based on the configurable cell parameter set included in the assistance information, in order to reduce interference between the cell under the first node and neighboring cells.

In an embodiment of the present disclosure, the first node may co-interact with OAM upon receiving the assistance information, for example, by sending the assistance information to OAM. OAM will configure appropriate cell configurations for the cell under the first node based on the assistance information, to reduce interference between the cell under the first node and neighboring cells.

In an embodiment of the present disclosure, when the first node receives the assistance information sent by the second node, the first node can also select appropriate cell configuration parameters from the cell configuration parameter set based on the assistance information and the first node's own situation, in order to reduce interference between the cell under the first node and neighboring cells.

In an embodiment of the present disclosure, the first node's own situation includes but is not limited to information such as the location and/or movement trajectory of the cell under the first node.

In an embodiment of the present disclosure, the movement trajectory information may include but is not limited to historical location information, predicted path information, driving path information, flight path information, and/or satellite orbit information.

In an embodiment of the present disclosure, the cell configuration parameters in the cell configuration parameter set are available and will not cause interference with neighboring cells.

In an embodiment of the present disclosure, the cell configuration parameters in the cell configuration parameter set include but are not limited to available frequency point information, PCI, Cell Global Identifier (CGI), RACH resource configuration parameters, and so on.

In an embodiment of the present disclosure, the cell configuration parameters in the cell configuration parameter set may also include valid time. This valid time can be used to indicate the available valid time corresponding to the cell configuration parameter set, that is, outside the valid time, the cell configuration parameter set is unavailable or invalid.

Optionally, in an embodiment of the present disclosure, the interference indication information is used to indicate that there is signal interference in the first node and the cell under the first node.

In an embodiment of the present disclosure, the interference indication information can be obtained based on the information measured and reported by the UE, and the interference indication information can also be obtained based on the second node's own monitoring.

In an embodiment of the present disclosure, the interference indication information does not specifically refer to any fixed information. The interference indication information includes but is not limited to information about the interfering cell, the cause of interference, and/or the degree of interference.

In an embodiment of the present disclosure, the cause of interference includes but is not limited to PCI conflicts or RACH interference.

Optionally, in an embodiment of the present disclosure, the neighboring cell information list may include one or more neighboring cell information.

In an embodiment of the present disclosure, each neighboring cell information may include at least one of:
PCI;
CGI;
time-frequency resource location where a synchronization signal is located;
RACH configuration;
cell coverage area and/or movement trajectory;
transmission power or coverage area of the cell;
valid time of cell configuration.

In an embodiment of the present disclosure, the RACH configuration includes but is not limited to the time-frequency resource configuration where RACH is located.

In an embodiment of the present disclosure, the synchronization signal includes but is not limited to a Primary Synchronization Signal (PSS), a Secondary Synchronization Signal (SSS), and the like.

In an embodiment of the present disclosure, the coverage area of the cell can be determined based on the location information of the transmission reception point (TRP) of the cell.

In an embodiment of the present disclosure, neighboring cells may include moving cells and/or fixed cells.

For example, in an embodiment of the present disclosure, the first node is an IAB-donor, the second node is an IAB-node, and wherein the first node configures the cell under the second node based on the assistance information.

For example, in an embodiment of the present disclosure, the first node is a source IAB-donor or source base station, and the second node is a target IAB-donor or target base station, and wherein the first node configures the cell under the second node based on the assistance information.

In an embodiment of the present disclosure, when the first node is the IAB-donor, the first node may be the IAB-donor-CU, for example.

For example, in an embodiment of the present disclosure, the assistance information includes at least one of:
cell configuration information that the first node is able to support;
interference indication information;
trajectory information of movement.

Optionally, in an embodiment of the present disclosure, the cell configuration information that the first node is able to support is used to indicate cell configuration information that can be supported by cells under the first node.

Optionally, in an embodiment of the present disclosure, the interference indication information is used to indicate the interference information measured by the first node itself.

In an embodiment of the present disclosure, the interference indication information does not specifically refer to any fixed information. The interference indication information includes but is not limited to information about the interfering cell, the cause of interference, and/or the degree of interference.

In an embodiment of the present disclosure, the cause of interference includes but is not limited to PCI conflicts or RACH interference.

Optionally, in an embodiment of the present disclosure, the trajectory information of movement may be, for example, past trajectory information or predicted trajectory information of IAB-MT under the first node.

For example, in an embodiment of the present disclosure, the assistance information is transmitted through an F1 application protocol (F1AP) message or a radio resource control (RRC) message.

For example, in an embodiment of the present disclosure, the assistance information is transmitted through an Xn application protocol (XnAP) message.

For example, in an embodiment of the present disclosure, when the first node configures the cell under the first node or the cell under the second node based on the assistance information, the first node may also configure the first node or the second node based on the assistance information.

In summary, in embodiments of the present disclosure, assistance information sent by the second node is received; and the cell under the first or second node is configured based on assistance information. In embodiments of the present disclosure, enabling a node to configure a cell based on the assistance information sent by another node can select appropriate cell configuration for the cell on the IAB node, thereby reducing control signal interference between cells under the IAB node and other cells, and reducing the impact on access of terminal devices and normal operation of services.

Fig. 3 is a schematic flowchart of a cell configuration method provided in an embodiment of the present disclosure. The method is performed by a first node, and as shown in Fig. 3, the method may include the following steps:
Step 301, receiving assistance information sent by a second node;
Step 302, configuring a cell under the first node based on the assistance information.

For example, in an embodiment of the present disclosure, the first node is an IAB-node, and the second node is a termination node (IAB-donor).

For example, in an embodiment of the present disclosure, the assistance information includes at least one of:
a configurable cell parameter set;
interference indication information;
a neighboring cell information list.

Optionally, in an embodiment of the present disclosure, when the first node receives the assistance information sent by the second node, it can consider the assistance information and/or its own situation to decide whether to configure the first node or the cell under the first node based on the assistance information, in order to reduce the interference between the cells under the first node and neighboring cells.

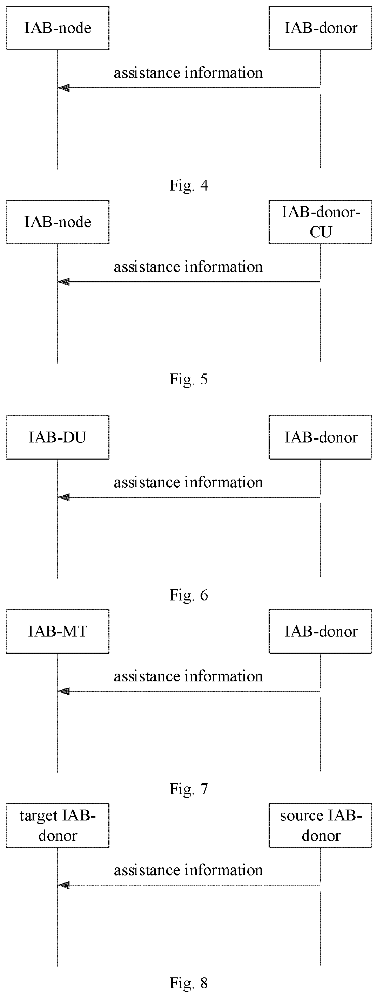

In an embodiment of the present disclosure, Fig. 4 is a schematic diagram of interaction of a cell configuration method provided in an embodiment of the present disclosure. As shown in Fig. 4, the first node is an IAB-node and the second node is an IAB-donor, which can send the assistance information to the IAB-node. The IAB-node can receive the assistance information sent by the IAB-donor and configure the cell under the IAB-node based on the assistance information. When the IAB-node configures the cells under the IAB-node based on the assistance information, it can be to configure (or establish) new cells and/or update the configuration of existing cells.

In an embodiment of the present disclosure, when the IAB-node configures cells under the IAB-node based on the assistance information, if a new cell is configured, the IAB-node sends the newly configured cell information (which can be referred to as "establishing a new cell") to the IAB-donor; if it is a configuration update for an existing cell, the IAB-node can send the cell configuration update to the IAB-donor.

In summary, in embodiments of the present disclosure, assistance information sent by the second node is received; and the cell under the first node is configured based on the assistance information. In embodiments of the present disclosure, since the cell under the first node is mobile in the IAB topology or NTN network, enabling a node to configure the cell under the first node based on the assistance information sent by another node can enable the first node to select an appropriate cell configuration for the cell under the first node based on neighbor information and/or interference information, as well as its own situation. This can reduce control signal interference between the cell under the first node and other cells, reduce the impact on access of terminal devices and normal operation of services, and reduce poor user experience caused by terminal device access failure and interference.

Embodiments of the present disclosure further provide a cell configuration method. The method is performed by a first node, and the method may include the following steps:
Step 401, receiving assistance information sent by a second node;
Step 402, configuring a cell under the first node based on the assistance information.

For example, in an embodiment of the present disclosure, the first node is an IAB-node, and the second node is an IAB-donor-CU.

For example, in an embodiment of the present disclosure, the assistance information includes at least one of:
a configurable cell parameter set;
interference indication information;
a neighboring cell information list.

Optionally, in an embodiment of the present disclosure, when the first node receives the assistance information sent by the second node, it can consider the assistance information and/or its own situation to decide whether to configure the first node or the cell under the first node based on the assistance information, in order to reduce the interference between the cell under the first node and neighboring cells.

In an embodiment of the present disclosure, Fig. 5 is a schematic diagram of interaction of a cell configuration method provided in an embodiment of the present disclosure. As shown in Fig. 5, the first node is an IAB-node and the second node is an IAB-donor-CU, which can send the assistance information to the IAB-node. The IAB-node can receive the assistance information sent by the IAB-donor-CU and configure the cell under the IAB-node based on the assistance information. When the IAB-node configures the cells under the IAB-node based on the assistance information, it can be to configure (or establish) new cells and/or update the configuration of existing cells.

In an embodiment of the present disclosure, when the IAB-node configures cells under the IAB-node based on the assistance information, if a new cell is configured, the IAB-node sends the newly configured cell information (which can be referred to as "establishing a new cell") to the IAB-donor-CU; if it is a configuration update for an existing cell, the IAB-node can send the cell configuration update to the IAB-donor-CU.

In summary, in embodiments of the present disclosure, assistance information sent by the second node is received; and the cell under the first node is configured based on the assistance information. In embodiments of the present disclosure, since the cell under the first node is mobile in the IAB topology or NTN network, enabling a node to configure the cell under the first node based on the assistance information sent by another node can enable the first node to select an appropriate cell configuration for the cell under the first node based on neighbor information and/or interference information, as well as its own situation. This can reduce control signal interference between the cell under the first node and other cells, reduce the impact on access of terminal devices and normal operation of services, and reduce poor user experience caused by terminal device access failure and interference.

Embodiments of the present disclosure further provide a cell configuration method. The method is performed by a first node, and the method may include the following steps:
Step 501, receiving assistance information sent by a second node;
Step 502, configuring a cell under the first node based on the assistance information.

For example, in an embodiment of the present disclosure, the first node is an IAB-DU in an IAB-node, and the second node is an IAB-donor.

For example, in an embodiment of the present disclosure, the assistance information includes at least one of:
a configurable cell parameter set;
interference indication information;
a neighboring cell information list.

In an embodiment of the present disclosure, since the communication between IAB-DU and IAB-donor can be transmitted using the F1AP message, the assistance information can be included in the F1AP message for transmission. The F1AP message can be, for example, an F1 SETUP RESPENSE message. The F1AP message can also be a GNB-CU CONFIGURATION UPDATE message, for example.

Optionally, in an embodiment of the present disclosure, when the first node receives the assistance information sent by the second node, it can consider the assistance information and/or its own situation to decide whether to configure the first node or the cell under the first node based on the assistance information, in order to reduce the interference between the cell under the first node and neighboring cells.

In an embodiment of the present disclosure, Fig. 6 is a schematic diagram of interaction of a cell configuration method provided in an embodiment of the present disclosure. As shown in Fig. 6, the first node is an IAB-DU and the second node is an IAB-donor, which can send the assistance information to the IAB-DU. The IAB-DU can receive the assistance information sent by the IAB-donor and configure the cell under the IAB-DU based on the assistance information. When the IAB-DU configures the cells under the IAB-DU based on the assistance information, it can be to configure (or establish) new cells and/or update the configuration of existing cells.

In an embodiment of the present disclosure, when the IAB-DU configures cells under the IAB-node based on the assistance information, if a new cell is configured, the IAB-DU sends the newly configured cell information (which can be referred to as "establishing a new cell") to the IAB-donor; if it is a configuration update for an existing cell, the IAB-DU can send the cell configuration update to the IAB-donor.

In summary, in embodiments of the present disclosure, assistance information sent by the second node is received; and the cell under the first node is configured based on the assistance information. In embodiments of the present disclosure, since the cell under the first node is mobile in the IAB topology or NTN network, enabling a node to configure the cell under the first node based on the assistance information sent by another node can enable the first node to select an appropriate cell configuration for the cell under the first node based on neighbor information and/or interference information, as well as its own situation. This can reduce control signal interference between the cell under the first node and other cells, reduce the impact on access of terminal devices and normal operation of services, and reduce poor user experience caused by terminal device access failure and interference.

Embodiments of the present disclosure further provide a cell configuration method. The method is performed by a first node, and the method may include the following steps:
Step 601, receiving assistance information sent by a second node;
Step 602, configuring a cell under the first node based on the assistance information.

For example, in an embodiment of the present disclosure, the first node is an IAB-MT in an IAB-node, and the second node is an IAB-donor.

For example, in an embodiment of the present disclosure, the assistance information includes at least one of:
a configurable cell parameter set;
interference indication information;
a neighboring cell information list.

In an embodiment of the present disclosure, since the communication between IAB-MT and IAB-donor can be transmitted using the RRC message, the assistance information can be included in the RRC message for transmission. The RRC message includes but is not limited to an RRC reconfiguration message, system information, DL Information Transfer message, or other RRC messages.

Optionally, in an embodiment of the present disclosure, when the first node receives the assistance information sent by the second node, it can consider the assistance information and/or its own situation to decide whether to configure the first node or the cell under the first node based on the assistance information, in order to reduce the interference between the cell under the first node and neighboring cells.

In an embodiment of the present disclosure, Fig. 7 is a schematic diagram of interaction of a cell configuration method provided in an embodiment of the present disclosure. As shown in Fig. 7, the first node is an IAB-MT and the second node is an IAB-donor, which can send the assistance information to the IAB-MT. The IAB-MT can receive the assistance information sent by the IAB-donor, and IAB-DU located on the same IAB-node as IAB-MT or IAB-node where IAB-MT is located can configure the cells under the IAB-DU located on the same IAB-node as IAB-MT based on the assistance information. The IAB-DU or IAB-node can configure the cells under IAB-node based on the assistance information, which can be configuring (or establishing) new cells and/or updating the configuration of existing cells.

In an embodiment of the present disclosure, when the IAB-DU or IAB-node configures cells under the IAB-node based on the assistance information, if a new cell is configured, the IAB-MT sends the newly configured cell information (which can be referred to as "establishing a new cell") to the IAB-donor; if it is a configuration update for an existing cell, the IAB-MT can send the cell configuration update to the IAB-donor.

In summary, in embodiments of the present disclosure, assistance information sent by the second node is received; and the cell under the first node is configured based on the assistance information. In embodiments of the present disclosure, since the cell under the first node is mobile in the IAB topology or NTN network, enabling a node to configure the cell under the first node based on the assistance information sent by another node can enable the first node to select an appropriate cell configuration for the cell under the first node based on neighbor information and/or interference information, as well as its own situation. This can reduce control signal interference between the cell under the first node and other cells, reduce the impact on access of terminal devices and normal operation of services, and reduce poor user experience caused by terminal device access failure and interference.

Embodiments of the present disclosure further provide a cell configuration method. The method is performed by a first node, and the method may include the following steps:
Step 701, receiving assistance information sent by a second node;
Step 702, configuring a cell under the first node based on the assistance information.

For example, in an embodiment of the present disclosure, the first node is a target IAB-donor, the second node is a source IAB-donor, and the assistance information is transmitted by an XnAP message.

For example, in an embodiment of the present disclosure, the assistance information includes at least one of:
a configurable cell parameter set;
interference indication information;
a neighboring cell information list.

In an embodiment of the present disclosure, when the assistance information is transmitted by the XnAP message, the assistance information can be included in the XnAP message for transmission. The XnAP message includes but is not limited to a HANDOVER REQUEST ACKNOWLEDGE message, an XNAP SETUP message, a NG-RAN NODE CONFIGURATION UPDATE message or other XnAP messages.

Optionally, in an embodiment of the present disclosure, when the first node is a target IAB-donor and the second node is a source IAB-donor, the first and second nodes may be in the process of migration.

Optionally, in an embodiment of the present disclosure, when the first node receives the assistance information sent by the second node, it can consider the assistance information and/or its own situation to decide whether to configure the first node or the cell under the first node based on the assistance information, in order to reduce the interference between the cell under the first node and neighboring cells.

In an embodiment of the present disclosure, Fig. 8 is a schematic diagram of interaction of a cell configuration method provided in an embodiment of the present disclosure. As shown in Fig. 8, the first node is a target IAB-donor and the second node is a source IAB-donor, which can send the assistance information to the target IAB-donor. The target IAB-donor can receive the assistance information sent by the source IAB-donor and configure the cell under the target IAB-donor based on the assistance information. When the target IAB-donor configures the cells under the target IAB-donor based on the assistance information, it can be to configure (or establish) new cells and/or update the configuration of existing cells.

In an embodiment of the present disclosure, when the target IAB-donor configures cells under the target IAB-donor based on the assistance information, if a new cell is configured, the target IAB-donor sends the newly configured cell information (which can be referred to as "establishing a new cell") to the source IAB-donor; if it is a configuration update for an existing cell, the target IAB-donor can send the cell configuration update to the source IAB-donor.

In summary, in embodiments of the present disclosure, assistance information sent by the second node is received; and the cell under the first node is configured based on the assistance information. In embodiments of the present disclosure, since the cell under the first node is mobile in the IAB topology or NTN network, enabling a node to configure the cell under the first node based on the assistance information sent by another node can enable the first node to select an appropriate cell configuration for the cell under the first node based on neighbor information and/or interference information, as well as its own situation. This can reduce control signal interference between the cell under the first node and other cells, reduce the impact on access of terminal devices and normal operation of services, and reduce poor user experience caused by terminal device access failure and interference.

Embodiments of the present disclosure further provide a cell configuration method. The method is performed by a first node, and the method may include the following steps:
Step 801, receiving assistance information sent by a second node;
Step 802, configuring a cell under the first node based on the assistance information.

For example, in an embodiment of the present disclosure, the first node is a target base station, the second node is a source base station, and the assistance information is transmitted by an XnAP message.

For example, in an embodiment of the present disclosure, the assistance information includes at least one of:
a configurable cell parameter set;
interference indication information;
a neighboring cell information list.

Optionally, in an embodiment of the present disclosure, the base stations in the target base station and the source base station are other than the IAB-donor. The target base station or the source base station does not specifically refer to a fixed base station. For example, the base stations in the target base station and the source base station can be Non-Terrestrial Networks (NTN) base stations, and the base stations in the target base station and the source base station can also be gNBs.

In an embodiment of the present disclosure, when the assistance information is transmitted by the XnAP message, the assistance information can be included in the XnAP message for transmission. The XnAP message includes but is not limited to a HANDOVER REQUEST ACKNOWLEDGE message, an XNAP SETUP message, a NG-RAN NODE CONFIGURATION UPDATE message or other XnAP messages.

Optionally, in an embodiment of the present disclosure, when the first node receives the assistance information sent by the second node, it can consider the assistance information and/or its own situation to decide whether to configure the first node or the cell under the first node based on the assistance information, in order to reduce the interference between the cell under the first node and neighboring cells.

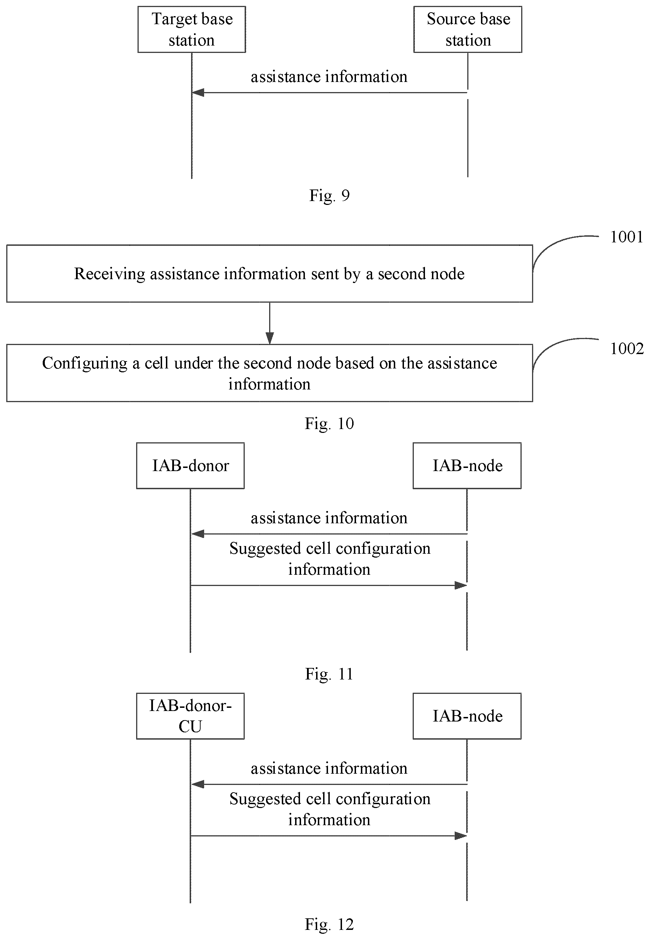

In an embodiment of the present disclosure, Fig. 9 is a schematic diagram of interaction of a cell configuration method provided in an embodiment of the present disclosure. As shown in Fig. 9, the first node is a target base station and the second node is a source base station, which can send the assistance information to the target base station. The target base station can receive the assistance information sent by the source base station and configure the cell under the target base station based on the assistance information. When the target base station configures the cells under the target base station based on the assistance information, it can be to configure (or establish) new cells and/or update the configuration of existing cells.

In an embodiment of the present disclosure, when the target base station configures cells under the target base station based on the assistance information, if a new cell is configured, the target base station sends the newly configured cell information (which can be referred to as "establishing a new cell") to the source base station; if it is a configuration update for an existing cell, the target base station can send the cell configuration update to the source base station.

In summary, in embodiments of the present disclosure, assistance information sent by the second node is received; and the cell under the first node is configured based on the assistance information. In embodiments of the present disclosure, since the cell under the first node is mobile in the IAB topology or NTN network, enabling a node to configure the cell under the first node based on the assistance information sent by another node can enable the first node to select an appropriate cell configuration for the cell under the first node based on neighbor information and/or interference information, as well as its own situation. This can reduce control signal interference between the cell under the first node and other cells, reduce the impact on access of terminal devices and normal operation of services, and reduce poor user experience caused by terminal device access failure and interference.

Fig. 10 is a schematic flowchart of a cell configuration method provided in an embodiment of the present disclosure. The method is performed by a first node, and as shown in Fig. 10, the method may include the following steps:
Step 1001, receiving assistance information sent by a second node;
Step 1002, configuring a cell under the second node based on the assistance information.

For example, in an embodiment of the present disclosure, the first node is an IAB-donor, and the second node is an IAB-node.

For example, in an embodiment of the present disclosure, the assistance information includes at least one of:
cell configuration information that the first node is able to support;
interference indication information;
trajectory information of movement.

For example, in an embodiment of the present disclosure, when the first node configures the second node or a cell under the second node based on the assistance information, the first node may consider the assistance information and/or neighboring cell information to select an appropriate cell configuration for the cell under the second node, in order to reduce control signal interference between the cell under the second node and neighboring cells.

Optionally, in an embodiment of the present disclosure, when the first node configures the second node or a cell under the second node based on the assistance information, the first node may send suggested cell configuration information to the second node. The suggested cell configuration information is the cell configuration information selected or suggested by the first node for the second node based on the assistance information and/or neighboring cell information. The suggested cell configuration information can reduce control signal interference between the cell under the second node and neighboring cells.

In an embodiment of the present disclosure, Fig. 11 is a schematic diagram of interaction of a cell configuration method provided in an embodiment of the present disclosure. As shown in Fig. 11, the first node is an IAB-donor and the second node is an IAB-node, which can send the assistance information to the IAB-donor. The IAB-donor can receive the assistance information sent by the IAB-node and send suggested cell configuration information to the IAB-node based on the assistance information. The IAB-node can configure the cells under the IAB-node considering the suggested cell configuration information.

In an embodiment of the present disclosure, when the IAB-donor configures cells under the IAB-node based on the suggested cell configuration information, it can be to configure (or establish) new cells and/or update the configuration of existing cells. If it is configuring a new cell, the IAB-node sends the newly configured cell information (which can be called "establishing a new cell") to the IAB-donor; if it is a configuration update for an existing cell, the IAB-node can send the cell configuration update to the IAB-donor.

In an embodiment of the present disclosure, the second node can also determine based on its own situation whether the second node can configure the cells under the second node according to the suggested cell configuration information.

In summary, in embodiments of the present disclosure, assistance information sent by the second node is received; and the cell under the second node is configured based on the assistance information. In embodiments of the present disclosure, since the cell under the second node is mobile in the IAB topology or NTN network, a node with comprehensive neighbor information can select an appropriate cell configuration for the cell under the second node based on the assistance information and/or interference information sent by another node, as well as neighbor information. This can reduce control signal interference between the cell under the second node and other cells, reduce the impact on access of terminal devices and normal operation of services, and reduce the situation of poor user experience caused by terminal device access failure and interference.

Embodiments of the present disclosure further provide a schematic flowchart of a cell configuration method. The method is performed by a first node, and the method may include the following steps:
Step 1101, receiving assistance information sent by a second node;
Step 1102, configuring a cell under the second node based on the assistance information.

For example, in an embodiment of the present disclosure, the first node is an IAB-donor-CU, and the second node is an IAB-node.

For example, in an embodiment of the present disclosure, the assistance information includes at least one of:
cell configuration information that the first node is able to support;
interference indication information;
trajectory information of movement.

For example, in an embodiment of the present disclosure, when the first node configures the second node or a cell under the second node based on the assistance information, the first node may consider the assistance information and/or neighboring cell information to select an appropriate cell configuration for the cell under the second node, in order to reduce control signal interference between the cell under the second node and neighboring cells.

Optionally, in an embodiment of the present disclosure, when the first node configures the second node or a cell under the second node based on the assistance information, the first node may send suggested cell configuration information to the second node. The suggested cell configuration information is the cell configuration information selected or suggested by the first node for the second node based on the assistance information and/or neighboring cell information. The suggested cell configuration information can reduce control signal interference between the cell under the second node and neighboring cells.

Optionally, in an embodiment of the present disclosure, Fig. 12 is a schematic diagram of interaction of a cell configuration method provided in an embodiment of the present disclosure. As shown in Fig. 12, the first node is an IAB-donor-CU and the second node is an IAB-node, which can send the assistance information to the IAB-donor-CU. The IAB-donor-CU can receive the assistance information sent by the IAB-node and send suggested cell configuration information to the IAB-node based on the assistance information. The IAB-node can configure the cells under the IAB-node considering the suggested cell configuration information.

In an embodiment of the present disclosure, when the IAB-donor-CU configures cells under the IAB-node based on the suggested cell configuration information, it can be to configure (or establish) new cells and/or update the configuration of existing cells. If it is configuring a new cell, the IAB-node sends the newly configured cell information (which can be called "establishing a new cell") to the IAB-donor-CU; if it is a configuration update for an existing cell, the IAB-node can send the cell configuration update to the IAB-donor-CU.

In an embodiment of the present disclosure, the second node can also determine based on its own situation whether the second node can configure the cells under the second node according to the suggested cell configuration information.

In summary, in embodiments of the present disclosure, assistance information sent by the second node is received; and the cell under the second node is configured based on the assistance information. In embodiments of the present disclosure, since the cell under the second node is mobile in the IAB topology or NTN network, a node with comprehensive neighbor information can select an appropriate cell configuration for the cell under the second node based on the assistance information and/or interference information sent by another node, as well as neighbor information. This can reduce control signal interference between the cell under the second node and other cells, reduce the impact on access of terminal devices and normal operation of services, and reduce the situation of poor user experience caused by terminal device access failure and interference.

Embodiments of the present disclosure further provide a schematic flowchart of a cell configuration method. The method is performed by a first node, and the method may include the following steps:
Step 1201, receiving assistance information sent by a second node;
Step 1202, configuring a cell under the second node based on the assistance information.

For example, in an embodiment of the present disclosure, the first node is an IAB-donor, and the second node is an IAB-DU in an IAB-node.

For example, in an embodiment of the present disclosure, the assistance information includes at least one of:
cell configuration information that the first node is able to support;
interference indication information;
trajectory information of movement.

In an embodiment of the present disclosure, since communication between IAB-DU and IAB-donor can be transmitted using the F1AP message, the assistance information can be included in the F1AP message for transmission. The F1AP message that includes the assistance information can be an F1 SETUP QUEST message, for example. The F1AP message that includes the assistance information can also be a GNB-DU CONFIGURATION UPDATE message, for example.

For example, in an embodiment of the present disclosure, when the first node configures the second node or a cell under the second node based on the assistance information, the first node may consider the assistance information and/or neighboring cell information to select an appropriate cell configuration for the cell under the second node, in order to reduce control signal interference between the cell under the second node and neighboring cells.

Optionally, in an embodiment of the present disclosure, when the first node configures the second node or a cell under the second node based on the assistance information, the first node may send suggested cell configuration information to the second node. The suggested cell configuration information is the cell configuration information selected or suggested by the first node for the second node based on the assistance information and/or neighboring cell information. The suggested cell configuration information can reduce control signal interference between the cell under the second node and neighboring cells.

In an embodiment of the present disclosure, since communication between IAB-DU and IAB-donor can be transmitted using the F1AP message, the suggested cell configuration information can be included in the F1AP message for transmission. The F1AP message that includes the suggested cell configuration information can be an F1 SETUP RESPENSE message or a GNB-CU CONFIGURATION UPDATE message.

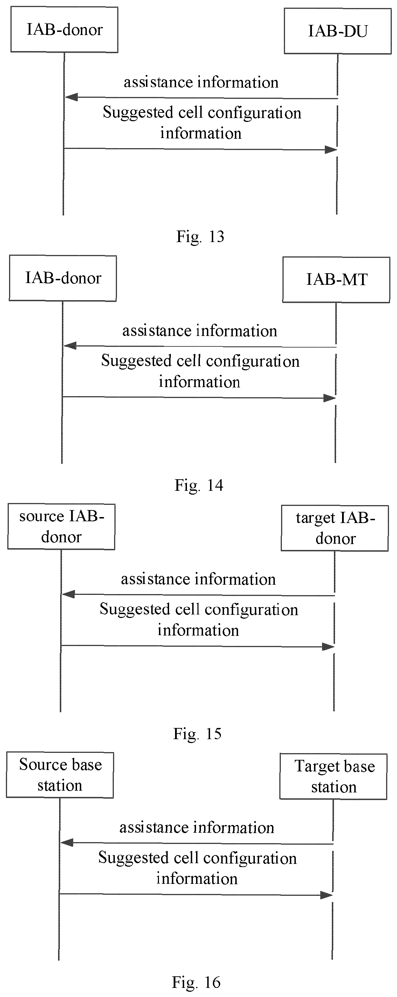

Optionally, in an embodiment of the present disclosure, Fig. 13 is a schematic diagram of interaction of a cell configuration method provided in an embodiment of the present disclosure. As shown in Fig. 13, the first node is an IAB-donor and the second node is an IAB-DU, which can send the assistance information to the IAB-donor. The IAB-donor can receive the assistance information sent by the IAB-DU and send suggested cell configuration information to the IAB-DU based on the assistance information. The IAB-DU can configure the cells under the IAB-DU considering the suggested cell configuration information.

In an embodiment of the present disclosure, when the IAB-donor configures cells under the IAB-DU based on the suggested cell configuration information, it can be to configure (or establish) new cells and/or update the configuration of existing cells. If it is configuring a new cell, the IAB-DU sends the newly configured cell information (which can be called "establishing a new cell") to the IAB-donor; if it is a configuration update for an existing cell, the IAB-DU can send the cell configuration update to the IAB-donor.

In an embodiment of the present disclosure, the second node can also determine based on its own situation whether the second node can configure the cells under the second node according to the suggested cell configuration information.

In summary, in embodiments of the present disclosure, assistance information sent by the second node is received; and the cell under the second node is configured based on the assistance information. In embodiments of the present disclosure, since the cell under the second node is mobile in the IAB topology or NTN network, a node with comprehensive neighbor information can select an appropriate cell configuration for the cell under the second node based on the assistance information and/or interference information sent by another node, as well as neighbor information. This can reduce control signal interference between the cell under the second node and other cells, reduce the impact on access of terminal devices and normal operation of services, and reduce the situation of poor user experience caused by terminal device access failure and interference.

Embodiments of the present disclosure further provide a schematic flowchart of a cell configuration method. The method is performed by a first node, and the method may include the following steps:
Step 1301, receiving assistance information sent by a second node;
Step 1302, configuring a cell under the second node based on the assistance information.

For example, in an embodiment of the present disclosure, the first node is an IAB-donor, and the second node is an IAB-node.

For example, in an embodiment of the present disclosure, the assistance information includes at least one of:
cell configuration information that the first node is able to support;
interference indication information;
trajectory information of movement.

In an embodiment of the present disclosure, since the IAB-node includes IAB-MT and IAB-DU, if it is communication between IAB-MT in the IAB-node and IAB-donor, the assistance information can be included in the RRC message for transmission. The RRC message that includes the assistance information includes but is not limited to a UL Information Transfer message, an IAB Other Information message, or other RRC messages.

For example, in an embodiment of the present disclosure, when the first node configures the second node or a cell under the second node based on the assistance information, the first node may consider the assistance information and/or neighboring cell information to select an appropriate cell configuration for the cell under the second node, in order to reduce control signal interference between the cell under the second node and neighboring cells.

Optionally, in an embodiment of the present disclosure, when the first node configures the second node or a cell under the second node based on the assistance information, the first node may send suggested cell configuration information to the second node. The suggested cell configuration information is the cell configuration information selected or suggested by the first node for the second node based on the assistance information and/or neighboring cell information. The suggested cell configuration information can reduce control signal interference between the cell under the second node and neighboring cells.

In an embodiment of the present disclosure, since the IAB-node includes IAB-MT and IAB-DU, if it is communication between IAB-MT in the IAB-node and IAB-donor, the suggested cell configuration information can be included in the RRC message for transmission. The RRC message that includes the suggested cell configuration information includes but is not limited to a DL Information Transfer message, an RRC reconfiguration message, system information, or other RRC messages.

Optionally, in an embodiment of the present disclosure, Fig. 14 is a schematic diagram of interaction of a cell configuration method provided in an embodiment of the present disclosure. As shown in Fig. 14, the first node is an IAB-donor and the second node is an IAB-node. The IAB-MT in the IAB-node can send the assistance information to the IAB-donor. The IAB-donor can receive the assistance information sent by the IAB-MT and send suggested cell configuration information to the IAB-MT based on the assistance information. The IAB-node can obtain the suggested cell configuration information through the IAB-MT, and can configure the cells under the IAB-DU in the IAB-node considering the suggested cell configuration information.

In an embodiment of the present disclosure, when the IAB-donor configures cells under the IAB-node based on the suggested cell configuration information, it can be to configure (or establish) new cells and/or update the configuration of existing cells. If it is configuring a new cell, the IAB-MT sends the newly configured cell information (which can be called "establishing a new cell") to the IAB-donor; if it is a configuration update for an existing cell, the IAB-MT can send the cell configuration update to the IAB-donor.

In an embodiment of the present disclosure, the second node can also determine based on its own situation whether the second node can configure the cells under the second node according to the suggested cell configuration information.

In summary, in embodiments of the present disclosure, assistance information sent by the second node is received; and the cell under the second node is configured based on the assistance information. In embodiments of the present disclosure, since the cell under the second node is mobile in the IAB topology or NTN network, a node with comprehensive neighbor information can select an appropriate cell configuration for the cell under the second node based on the assistance information and/or interference information sent by another node, as well as neighbor information. This can reduce control signal interference between the cell under the second node and other cells, reduce the impact on access of terminal devices and normal operation of services, and reduce the situation of poor user experience caused by terminal device access failure and interference.

Embodiments of the present disclosure further provide a schematic flowchart of a cell configuration method. The method is performed by a first node, and the method may include the following steps:
Step 1401, receiving assistance information sent by a second node;
Step 1402, configuring a cell under the second node based on the assistance information.

For example, in an embodiment of the present disclosure, the first node is a source IAB-donor, the second node is a target IAB-donor, and the assistance information is transmitted through an XnAP message.

For example, in an embodiment of the present disclosure, the first node is a source IAB-donor, the second node is a target IAB-donor, and the first node and the second node can be in the process of migration.

For example, in an embodiment of the present disclosure, the assistance information includes at least one of:
cell configuration information that the first node is able to support;
interference indication information;
trajectory information of movement.

In an embodiment of the present disclosure, when the assistance information is transmitted by the XnAP message, the assistance information may be included in the XnAP message for transmission. The XnAP message that includes the assistance information includes but is not limited to a HANDOVER REQUEST message, an XNAP SETUP message, an NG-RAN NODE CONFIGURATION UPDATE message, or other XnAP messages.

For example, in an embodiment of the present disclosure, when the first node configures the second node or a cell under the second node based on the assistance information, the first node may consider the assistance information and/or neighboring cell information to select an appropriate cell configuration for the cell under the second node, in order to reduce control signal interference between the cell under the second node and neighboring cells.

Optionally, in an embodiment of the present disclosure, when the first node configures the second node or a cell under the second node based on the assistance information, the first node may send suggested cell configuration information to the second node. The suggested cell configuration information is the cell configuration information selected or suggested by the first node for the second node based on the assistance information and/or neighboring cell information. The suggested cell configuration information can reduce control signal interference between the cell under the second node and neighboring cells.

In an embodiment of the present disclosure, the suggested cell configuration information may be included in the XnAP message for transmission. The XnAP message that includes the suggested cell configuration information includes but is not limited to a HANDOVER REQUEST ACKNOWLEDGE message, an XNAP SETUP message, an NG-RAN NODE CONFIGURATION UPDATE message, or other XnAP messages.

Optionally, in an embodiment of the present disclosure, Fig. 15 is a schematic diagram of interaction of a cell configuration method provided in an embodiment of the present disclosure. As shown in Fig. 15, the first node is a source IAB-donor and the second node is a target IAB-donor. The target IAB-donor can send the assistance information to the source IAB-donor. The source IAB-donor can receive the assistance information sent by the target IAB-donor and send suggested cell configuration information to the target IAB-donor based on the assistance information. The target IAB-donor can configure the cells under the target IAB-donor considering the suggested cell configuration information.

In an embodiment of the present disclosure, when the source IAB-donor configures cells under the target IAB-donor based on the suggested cell configuration information, it can be to configure (or establish) new cells and/or update the configuration of existing cells. If it is configuring a new cell, the target IAB-donor sends the newly configured cell information (which can be called "establishing a new cell") to the source IAB-donor; if it is a configuration update for an existing cell, the target IAB-donor can send the cell configuration update to the source IAB-donor.

In an embodiment of the present disclosure, the second node can also determine based on its own situation whether the second node can configure the cells under the second node according to the suggested cell configuration information.

In summary, in embodiments of the present disclosure, assistance information sent by the second node is received; and the cell under the second node is configured based on the assistance information. In embodiments of the present disclosure, since the cell under the second node is mobile in the IAB topology or NTN network, a node with comprehensive neighbor information can select an appropriate cell configuration for the cell under the second node based on the assistance information and/or interference information sent by another node, as well as neighbor information. This can reduce control signal interference between the cell under the second node and other cells, reduce the impact on access of terminal devices and normal operation of services, and reduce the situation of poor user experience caused by terminal device access failure and interference.

Embodiments of the present disclosure further provide a schematic flowchart of a cell configuration method. The method is performed by a first node, and the method may include the following steps:
Step 1501, receiving assistance information sent by a second node;
Step 1502, configuring a cell under the second node based on the assistance information.

For example, in an embodiment of the present disclosure, the first node is a source base station, the second node is a target base station, and the assistance information is transmitted through an XnAP message.

Optionally, in an embodiment of the present disclosure, the base stations in the target base station and the source base station are other than IAB-donor. The target base station or the source base station does not specifically refer to a fixed base station. For example, the base stations in the target base station and the source base station can be NTN base stations, and the base stations in the target base station and the source base station can also be gNB.

For example, in an embodiment of the present disclosure, the assistance information includes at least one of:
cell configuration information that the first node is able to support;
interference indication information;
trajectory information of movement.

In an embodiment of the present disclosure, when the assistance information is transmitted by the XnAP message, the assistance information may be included in the XnAP message for transmission. The XnAP message that includes the assistance information includes but is not limited to a HANDOVER REQUEST message, an XNAP SETUP message, an NG-RAN NODE CONFIGURATION UPDATE message, or other XnAP messages.

For example, in an embodiment of the present disclosure, when the first node configures the second node or a cell under the second node based on the assistance information, the first node may consider the assistance information and/or neighboring cell information to select an appropriate cell configuration for the cell under the second node, in order to reduce control signal interference between the cell under the second node and neighboring cells.

Optionally, in an embodiment of the present disclosure, when the first node configures the second node or a cell under the second node based on the assistance information, the first node may send suggested cell configuration information to the second node. The suggested cell configuration information is the cell configuration information selected or suggested by the first node for the second node based on the assistance information and/or neighboring cell information. The suggested cell configuration information can reduce control signal interference between the cell under the second node and neighboring cells.

In an embodiment of the present disclosure, the suggested cell configuration information may be included in the XnAP message for transmission. The XnAP message that includes the suggested cell configuration information includes but is not limited to a HANDOVER REQUEST ACKNOWLEDGE message, an XNAP SETUP message, an NG-RAN NODE CONFIGURATION UPDATE message, or other XnAP messages.

Optionally, in an embodiment of the present disclosure, Fig. 16 is a schematic diagram of interaction of a cell configuration method provided in an embodiment of the present disclosure. As shown in Fig. 16, the first node is a source base station and the second node is a target base station. The target base station can send the assistance information to the source base station. The source base station can receive the assistance information sent by the target base station and send suggested cell configuration information to the target base station based on the assistance information. The target base station can configure the cells under the target IAB-donor considering the suggested cell configuration information.

In an embodiment of the present disclosure, when the source base station configures cells under the target base station based on the suggested cell configuration information, it can be to configure (or establish) new cells and/or update the configuration of existing cells. If it is configuring a new cell, the target base station sends the newly configured cell information (which can be called "establishing a new cell") to the source base station; if it is a configuration update for an existing cell, the target base station can send the cell configuration update to the source base station.

In an embodiment of the present disclosure, the second node can also determine based on its own situation whether the second node can configure the cells under the second node according to the suggested cell configuration information.

In summary, in embodiments of the present disclosure, assistance information sent by the second node is received; and the cell under the second node is configured based on the assistance information. In embodiments of the present disclosure, since the cell under the second node is mobile in the IAB topology or NTN network, a node with comprehensive neighbor information can select an appropriate cell configuration for the cell under the second node based on the assistance information and/or interference information sent by another node, as well as neighbor information. This can reduce control signal interference between the cell under the second node and other cells, reduce the impact on access of terminal devices and normal operation of services, and reduce the situation of poor user experience caused by terminal device access failure and interference.

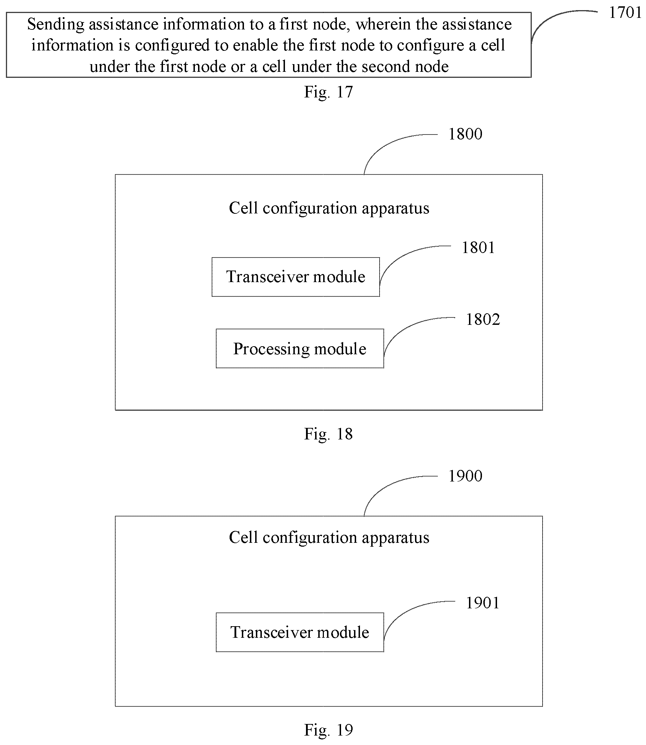

Fig. 17 is a schematic flowchart of a cell configuration method provided in an embodiment of the present disclosure. The method is performed by a second node, and the method may include the following steps:
Step 1701, sending assistance information to a first node, wherein the assistance information is configured to enable the first node to configure a cell under a first node or a cell under a second node.

For example, in an embodiment of the present disclosure, the first node is an integrated access and backhaul relay node (IAB-node), the second node is a termination node (IAB-donor), and the assistance information is used to enable the first node to configure the cell under the first node.

In an embodiment of the present disclosure, the first node is a target IAB-donor or target base station, the second node is a source IAB-donor or source base station, and the assistance information is used to enable the first node to configure the cell under the first node.

For example, in an embodiment of the present disclosure, the assistance information includes at least one of:
a configurable cell parameter set;
interference indication information;
a neighboring cell information list.

In an embodiment of the present disclosure, the first node is an IAB-donor, the second node is an IAB-node, and wherein the assistance information is used to enable the first node to configure the cell under the second node.

For example, in an embodiment of the present disclosure, the first node is a source IAB-donor or source base station, the second node is a target IAB-donor or target base station, and wherein the assistance information is used to enable the first node to configure the cell under the second node.

For example, in an embodiment of the present disclosure, the assistance information includes at least one of:
cell configuration information that the first node is able to support;
interference indication information;
trajectory information of movement.

In an embodiment of the present disclosure, the assistance information is transmitted through an F1 application protocol (F1AP) message or a radio resource control (RRC) message.

For example, in an embodiment of the present disclosure, the assistance information is transmitted through an Xn application protocol (XnAP) message.

In summary, in embodiments of the present disclosure, the assistance information is sent to the first node, where the assistance information is used to enable the first node to configure the cell under the first node or the cell under the second node. In embodiments of the present disclosure, enabling a node to configure a cell based on assistance information sent by another node can select an appropriate cell configuration for the cell on the IAB-node, thereby reducing control signal interference between cell under the IAB-node and other cells, and reducing the impact on access of terminal devices and normal operation of services.

Fig. 18 is a block diagram of a cell configuration apparatus provided in an embodiment of the present disclosure. As shown in Fig. 18, the apparatus 1800 can be arranged on a first node, and the apparatus 1800 can include:
a transceiver module 1801, configured to receive assistance information sent by a second node; and
a processing module 1802, configured to configure a cell under a first node or a cell under a second node based on the assistance information.

In summary, in the cell configuration apparatus of embodiments of the present disclosure, the assistance information sent by the second node can be received through the transceiver module; and the processing module can configure the cell under the first or second node based on the assistance information. In embodiments of the present disclosure, configuring a cell based on assistance information sent by another node can select an appropriate cell configuration for the cell on the IAB-node, thereby reducing control signal interference between cell under the IAB-node and other cells, and reducing the impact on access of terminal devices and normal business operations.

Optionally, in an embodiment of the present disclosure, the first node is an integrated access and backhaul relay node (IAB-node), the second node is a termination node (IAB-donor), and the processing module 1802 in the first node can configure the cell under the first node based on the assistance information.

Optionally, in an embodiment of the present disclosure, the first node is a target IAB-donor or target base station, the second node is a source IAB-donor or source base station, and the processing module 1802 in the first node can configure the cell under the first node based on the assistance information.

Optionally, in an embodiment of the present disclosure, the assistance information includes at least one of:
a configurable cell parameter set;
interference indication information;
a neighboring cell information list.

Optionally, in an embodiment of the present disclosure, the first node is an IAB-donor, the second node is an IAB-node, and wherein the processing module 1802 in the first node can configure the cell under the second node based on the assistance information.

Optionally, in an embodiment of the present disclosure, the first node is a source IAB-donor or source base station, the second node is a target IAB-donor or target base station, and wherein the processing module 1802 in the first node can configure the cell under the second node based on the assistance information.

Optionally, in an embodiment of the present disclosure, the assistance information includes at least one of:
cell configuration information that the first node is able to support;
interference indication information;
trajectory information of movement.

Optionally, in an embodiment of the present disclosure, the assistance information is transmitted through an F1 application protocol (F1AP) message or a radio resource control (RRC) message.

Optionally, in an embodiment of the present disclosure, the assistance information is transmitted through an Xn application protocol (XnAP) message.

Fig. 19 is a block diagram of a cell configuration apparatus provided in an embodiment of the present disclosure. As shown in Fig. 19, the apparatus 900 can be arranged on a second node, and the apparatus 1900 can include:

a transceiver module 1901, configured to send assistance information to a first node, wherein the assistance information is configured to enable the first node to configure a cell under the first node or a cell under the second node.

In summary, in the cell configuration apparatus of embodiments of the present disclosure, assistance information can be sent to the first node through the transceiver module, where the assistance information is used to enable the first node to configure the cell under the first node or the second node. In embodiments of the present disclosure, enabling a node to configure a cell based on assistance information sent by another node can select an appropriate cell configuration for the cell on the IAB node, thereby reducing control signal interference between cell under the IAB node and other cells, and reducing the impact on access of terminal devices and normal operation of services.

Optionally, in an embodiment of the present disclosure, the first node is an integrated access and backhaul relay node (IAB-node), the second node is a termination node (IAB-donor), and the assistance information is used to enable the first cell to configure the cell under the first node.

Optionally, in an embodiment of the present disclosure, the first node is a target IAB-donor or target base station, the second node is a source IAB-donor or source base station, and the assistance information is used to enable the first node to configure the cell under the first node.

Optionally, in an embodiment of the present disclosure, the assistance information includes at least one of:
a configurable cell parameter set;
interference indication information;
a neighboring cell information list.

Optionally, in an embodiment of the present disclosure, the first node is an IAB-donor, the second node is an IAB-node, and wherein the assistance information is used to enable the first cell to configure the cell under the second node.

Optionally, in an embodiment of the present disclosure, the first node is a source IAB-donor or source base station, the second node is a target IAB-donor or target base station, and wherein the assistance information is used to enable the first cell to configure the cell under the second node.

Optionally, in an embodiment of the present disclosure, the assistance information includes at least one of:
cell configuration information that the first node is able to support;
interference indication information;
trajectory information of movement.

Optionally, in an embodiment of the present disclosure, the assistance information is transmitted through an F1 application protocol (F1AP) message or a radio resource control (RRC) message.

Optionally, in an embodiment of the present disclosure, the assistance information is transmitted through an Xn application protocol (XnAP) message.

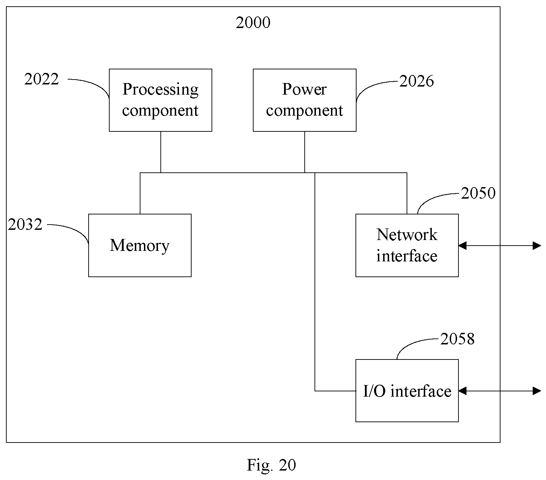

Fig. 20 is a block diagram of a network side device 2000 provided in an embodiment of the present disclosure. For example, the network side device 2000 can be provided as a network side device. Referring to Fig. 20, the network side device 2000 includes a processing component 2022, which further includes at least one processor and memory resources represented by memory 2032, for storing instructions that can be executed by the processing component 2022, such as application programs. The application program stored in the memory 2032 may include one or more modules each corresponding to a set of instructions. In addition, the processing component 2022 is configured to execute instructions to execute any of the methods described above and applied to the network side devices.

The network side device 2000 may also include a power component 2026 configured to perform power management for the network side device 2000, a wired or wireless network interface 2050 configured to connect the network side device 2000 to the network, and an input/output (I/O) interface 2058. The network side device 2000 can operate operating systems based on memory 2032, such as Windows Server TM, Mac OS XTM, Unix TM, Linux TM, Free BSDTM, or similar.

In the above embodiments provided in this disclosure, the methods provided in this disclosure are introduced from the perspectives of network side devices and UE, respectively. In order to achieve the various functions in the methods provided in the embodiments of the present disclosure, the network side devices and UE may include hardware structures and software modules, which can be implemented in the form of hardware structures, software modules, or a combination of hardware structures and software modules. One of the above functions can be executed in the form of hardware structure, software module, or a combination of hardware structure and software module.

In the above embodiments provided in this disclosure, the methods provided in this disclosure are introduced from the perspectives of network side devices and UE, respectively. In order to achieve the various functions in the methods provided in the embodiments of the present disclosure, the network side devices and UE may include hardware structures and software modules, which can be implemented in the form of hardware structures, software modules, or a combination of hardware structures and software modules. One of the above functions can be executed in the form of hardware structure, software module, or a combination of hardware structure and software module.

Embodiments of the present disclosure provide a communication device. The communication device may include a transceiver module and a processing module. The transceiver module may include a sending module and/or a receiving module. The sending module is used to implement the sending function, and the receiving module is used to implement the receiving function. The transceiver module can implement the sending function and/or the receiving function.

The communication device may be a network device, a device in the network device, or a device that can be used in conjunction with the network device.

Embodiments of the present disclosure provide another communication device. The communication device may be a network device, or may be a chip, a chip system, or a processor that supports the network device to implement the above methods, or may be a chip, a chip system, or a processor that supports the terminal device to implement the above methods. This device can be used to implement the methods described in the above method embodiments, which can be referred to in the description of the above method embodiments.

The communication device may include one or more processors. The processor may be a general-purpose processor or a dedicated processor, etc. For example, it may be a baseband processor or a central processing unit. The baseband processor can be used to process communication protocols and communication data, while the central processor can be used to control communication devices (such as base stations, baseband chips, terminal devices, terminal device chips, DU or CU, etc.), execute computer programs, and process data from computer programs.

Optionally, the communication device may also include one or more memories, on which computer programs may be stored. The processor executes the computer programs to enable the communication device to perform the methods described in the above method embodiments. Optionally, the memory may also store data. The communication device and the memory can be set separately or integrated together.

Optionally, the communication device may also include a transceiver and an antenna. The transceiver can be referred to as a transceiver unit, transceiver machine, or transceiver circuit, etc., used to achieve transceiver functions. The transceiver can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device may also include one or more interface circuits. The interface circuit is used to receive code instructions and transmit them to the processor. The processor executes the code instructions to cause the communication device to perform the method described in the above method embodiments.

The communication device is the first node: the processor is configured to execute the method shown in any of Fig. 2-Fig. 16.

The communication device is the second node: the processor is configured to execute the method shown in Fig. 17.

In one implementation, the processor may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor may store a computer program that runs on the processor and enables the communication device to perform the method described in the above method embodiments. The computer program may be fixed in the processor, in which case the processor may be implemented by hardware.

In one implementation, the communication device may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a network device or a terminal device, but the scope of the communication device described in this disclosure is not limited to this, and the structure of the communication device may not be limited by this. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the communication device that can be a chip or chip system, the chip includes processors and interfaces. The number of processors can be one or more, and the number of interfaces can be multiple.

Optionally, the chip also includes a memory for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

After considering the specification and practicing the solution disclosed herein, those skilled in the art will easily come up with other embodiments of the present disclosure. This disclosure is intended to cover any variations, uses, or adaptive changes of this disclosure that follow the general principles of this disclosure and include common knowledge or customary technical means in the art that are not disclosed in this disclosure. The specification and embodiments are only considered exemplary, and the true scope and spirit of this disclosure are indicated by the following claims.

It should be understood that this disclosure is not limited to the precise structure described above and shown in the accompanying drawings, and various modifications and changes can be made without departing from its scope. The scope of this disclosure is limited only by the appended claims.

## Claims

1. A cell configuration method, performed by a first node, comprising:
receiving assistance information sent by a second node; and
configuring a cell under the first node or the second node based on the assistance information.

2. The method of claim 1, wherein the first node is an integrated access and backhaul relay node (IAB-node), the second node is a termination node (IAB-donor), and wherein the first node configures the cell under the first node based on the assistance information.

3. The method of claim 1, wherein the first node is a target IAB-donor or target base station, the second node is a source IAB-donor or source base station, and wherein the first node configures the cell under the first node based on the assistance information.

4. The method of claim 2 or 3, wherein the assistance information comprises at least one of:
a configurable cell parameter set;
interference indication information; or
a neighboring cell information list.

5. The method of claim 1, wherein the first node is an IAB-donor, the second node is an IAB-node, and wherein the first node configures the cell under the second node based on the assistance information.

6. The method of claim 1, wherein the first node is a source IAB-donor or source base station, the second node is a target IAB-donor or target base station, and wherein the first node configures the cell under the second node based on the assistance information.

7. The method of claim 5 or 6, wherein the assistance information comprises at least one of:
cell configuration information that the first node is able to support;
interference indication information; or
trajectory information of movement.

8. The method of claim 2 or 5, wherein the assistance information is transmitted through an F1 application protocol (F1AP) message or a radio resource control (RRC) message.

9. The method of claim 3 or 6, wherein the assistance information is transmitted through an Xn application protocol (XnAP) message.

10. A cell configuration method, performed by a second node, comprising:
sending assistance information to a first node, wherein the assistance information is configured to enable the first node to configure a cell under the first node or the second node.

11. The method of claim 10, wherein the first node is an integrated access and backhaul relay node (IAB-node), the second node is a termination node (IAB-donor), and wherein assistance information is configured to enable the first node to configure the cell under the first node.

12. The method of claim 10, wherein the first node is a target IAB-donor or target base station, the second node is a source IAB-donor or source base station, and wherein the assistance information is configured to enable the first node to configure the cell under the first node.

13. The method of claim 11 or 12, wherein the assistance information comprises at least one of:
a configurable cell parameter set;
interference indication information; or
a neighboring cell information list.

14. The method of claim 10, wherein the first node is an IAB-donor, the second node is an IAB-node, and wherein the assistance information is configured to enable the first node to configure the cell under the second node.

15. The method of claim 10, wherein the first node is a source IAB-donor or source base station, the second node is a target IAB-donor or target base station, and wherein the assistance information is configured to enable the first node to configure the cell under the second node.

16. The method of claim 14 or 15, wherein the assistance information comprises at least one of:
cell configuration information that the first node is able to support;
interference indication information; or
trajectory information of movement.

17. The method of claim 11 or 14, wherein the assistance information is transmitted through an F1 application protocol (F1AP) message or a radio resource control (RRC) message.

18. The method of claim 12 or 15, wherein the assistance information is transmitted through an Xn application protocol (XnAP) message.

19. A cell configuration apparatus, arranged on a first node side, comprising:
a transceiver module, configured to receive assistance information sent by a second node; and
a processing module, configured to configure a cell under the first node or the second node based on the assistance information.

20. A cell configuration apparatus, arranged on a second node side, comprising:
a transceiver module, configured to send assistance information to a first node, wherein the assistance information is configured to enable the first node to configure a cell under the first node or the second node.

21. A first node, comprising a processor and a memory, wherein the memory stores a computer program, the processor is configured to execute the computer program stored in the memory to cause the first node to perform the method according to any one of claims 1 to 9.

22. A second node, comprising a processor and a memory, wherein the memory stores a computer program, the processor is configured to execute the computer program stored in the memory to cause the second node to perform the method according to any one of claims 10 to 18.

23. A communication device, comprising a processor and an interface circuit, wherein
the interface circuit is configured to receive code instructions and transmit the code instructions to the processor;
the processor is configured to run the code instructions to execute the method according to any one of claims 1 to 9.

24. A communication device, comprising a processor and an interface circuit, wherein
the interface circuit is configured to receive code instructions and transmit the code instructions to the processor;
the processor is configured to run the code instructions to execute the method according to any one of claims 10 to 18.

25. A computer readable storage medium, stored with instructions which, when executed, cause the method of any of claims 1-9 to be implemented.

26. A computer readable storage medium, stored with instructions which, when executed, cause the method of any of claims 10-18 to be implemented.
